# EUROPÄISCHE PATENTSCHRIFT

(11) **EP 3 404 073 B1**
(45) Veröffentlichungstag und Bekanntmachung des Hinweises auf die Patenterteilung: **22.09.2021**
(21) Anmeldenummer: 17172009.7
(22) Anmeldetag: 19.05.2017
(51) Int. Cl.: C09D 175/08, C08G 18/79, C08G 18/77, C08G 18/28, C08G 18/18, C08G 18/73, C07F 7/18, C08G 18/80

(54) **HYDROPHILE, ALKOXYSILANHALTIGE ISOCYANURATE**
HYDROPHILIC ISOCYANURATES CONTAINING ALOXYSILANE
ISOCYANURATE HYDROPHILE À BASE D'ALCOXYSILE

(43) Veröffentlichungstag der Anmeldung: 21.11.2018
(73) Patentinhaber: Evonik Operations GmbH, 45128 Essen (DE)
(72) Erfinder: STACHE, Wiebke, 45699 Herten (DE); UNKELHÄUSSER, Tobias, 48249 Dülmen (DE); BRÜCKNER, Iris, 46284 Dorsten (DE); NAUMANN, Sabine, 44651 Herne (DE); DRÜNER, Marita, 48734 Reken (DE); SCHODER, Judith, 45721 Haltern am See (DE)
(74) Vertreter: Evonik Patent Association

(56) Entgegenhaltungen:
- WO-A1-2012/098014
- CN-A- 105 542 700
- JP-A- 2012 183 668

## Beschreibung

Die vorliegende Erfindung betrifft neuartige in Wasser dispergierbare hydrophile alkoxysilanhaltige Isocyanurate, die u.a. als Vernetzer eingesetzt werden können. Weiterhin betrifft die vorliegende Erfindung ein Verfahren zu ihrer Herstellung, sie umfassende Zusammensetzungen und ihre Verwendung in Beschichtungszusammensetzungen, insbesondere als Ausgangskomponente bei der Herstellung von Polyurethan-Kunststoffen, als Vernetzer für wasserlösliche oder -dispergierbare Lack-, Klebstoff- oder Dichtstoffbindemittel oder als Bindemittelkomponente.

Für wasserlösliche oder -dispergierbare Bindemittel gibt es viele Anwendungsgebiete, z.B. in Lacken, Farben, Textilbehandlungsmitteln und Klebstoffen. Nachteilig ist jedoch die schwache Resistenz gegenüber Wasser und Chemikalien. In diesem Punkt schneiden die lösemittelhaltigen Bindemittel oft besser ab als die wässrigen. Um die Beständigkeit von wasserlöslichen oder -dispergierbaren Bindemitteln zu verstärken, wird ein Vernetzer zum Bindemittel hinzugesetzt. Als Vernetzer kommen je nach Bindemittel u.a. hydrophile Produkte mit Methylol-, Ethylenimin-, Epoxy-, Isocyanat- oder Carbodiimid-Funktion zum Einsatz.

Wasserdispergierbare Polyisocyanate stellen eine Klasse von hydrophilen Vernetzern dar, die in den letzten Jahren für verschiedene Anwendungsgebiete an Bedeutung gewannen. Sie finden heute insbesondere Verwendung als Vernetzerkomponenten für Acrylat-basierte Lacke, qualitativ hochwertige wasserverdünnbare Zweikomponenten-Polyurethan-Lacke (2K-PUR-Lacke) oder als Zusatzmittel für wässrige Dispersionsklebstoffe. Sie dienen zur Vernetzung wässriger Dispersionen in der Textil- bzw. Lederausrüstung oder formaldehydfreier Textildruckfarben und eignen sich darüber hinaus beispielsweise auch als Hilfsmittel zur Nassverfestigung von Papier, wie z. B. in der EP 0 959 087 A1 offenbart.

In der Praxis werden heute für die überwiegende Mehrzahl der Anwendungen ausschließlich nichtionische, mit Hilfe von Polyethern hydrophil modifizierte Polyisocyanate eingesetzt. Die Herstellung solcher wasserdispergierbarer Polyisocyanate wird beispielsweise in EP 959 087 A1, EP 206 059 B1 und EP 540 985 A1 ausführlich diskutiert. Die Polyisocyanate enthalten in der Regel eine oder mehrere Isocyanuratstrukturen.

Auch DE 10 2005 030 523 A1 offenbart, dass kationische, anionische und/oder nichtionische Verbindungen, wie Mono- und/oder Dihydroxycarbonsäuren oder monofunktionelle Alkylethoxylate, auch in Gemischen untereinander als Hydrophilierungsmittel von Polyurethanen eingesetzt werden können. DE 10 2005 030 523 A1 lehrt weiterhin, hydroxyfunktionelle Amide wenigstens difunktioneller Carbonsäuren zur Hydrophilierung von Polyisocyanaten und Polyurethanen einzusetzen. Die dort eingesetzten Polyurethane können typischerweise Di- oder Triisocyanate sowie deren höhermolekularen Folgeprodukte mit Urethan-, Allophanat-, Biuret-, Uretdion- und/oder Isocyanuratgruppen mit zwei oder mehr freien NCO-Gruppen sein.

Vor dem Hintergrund einer zunehmend strengeren Umweltgesetzgebung wird nach toxikologisch unbedenklichen, NCO-freien Alternativen zu den hydrophilen Polyisocyanaten gesucht, welche möglichst die gleichen Anforderungen erfüllen.

Alkoxysilan-basierte Systeme stellen prinzipiell eine toxikologisch unbedenklichere Alternative zu den bisher bekannten hydrophilen Vernetzern mit Methylol-, Ethylenimin-, Epoxy- oder IsocyanatFunktion dar. Einige Alkoxysilan-basierte Systeme, wie z. B. Aminoalkylalkoxysilane, sind sogar wasserlöslich. Auch sind wasserbasierende Zusammensetzungen mit multifunktionellen Organopolysiloxanen, welche Silanolgruppen besitzen, als Haftvermittler bekannt, vgl.

EP 0 716 128 A2. Als Vernetzer für wäßrige Bindemittelkomponenten eignen sich die Silanole nur eingeschränkt, weil sie entweder zu reaktiv sind oder bezüglich der Lackeigenschaften nicht die gleichen Anforderungen wie hydrophile Polyisocyanate erfüllen.

WO 2012/098014 A1 offenbart wässrige Beschichtungsmittel umfassend mindestens eine hydroxylgruppenhaltige Verbindung und mindestens eine Verbindung mit freien und/oder blockierten Isocyanatgruppen. CN 105 542 700 A offenbart eine reaktive Zusammensetzung umfassend ein Isocyanurat, einen Silicium-basierten Vernetzer und einen Polyesterpolyol. JP 2012 183668 A offenbart eine reaktive Zusammensetzung umfassend Tetraethoxysilan und Polyvinylalkohol.

Aufgabe der vorliegenden Erfindung ist es somit, Zusammensetzungen bereitzustellen, die die vorgenannten Nachteile vermeiden, und insbesondere alkoxysilan-haltige wasserdispergierbare Vernetzer bereitzustellen, die sich gut in wässrigen Bindemittelzusammensetzungen homogenisieren lassen und eine lange Verarbeitungszeit ermöglichen.

Gelöst wurde die Aufgabe von einem alkoxysilanhaltigen Isocyanurat der Formel (II) 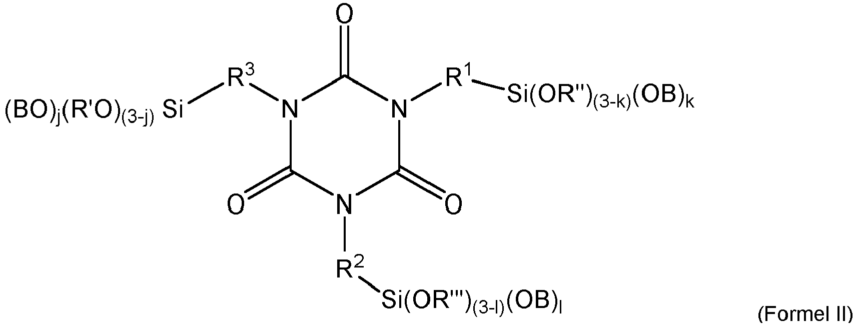 wobei
- R¹, R² und R³ jeweils unabhängig voneinander ein linearer oder verzweigter und/oder cyclischer C1-C8-Alkylenrest,
- R', R", R'" jeweils unabhängig voneinander ein linearer oder verzweigter und/oder cyclischer C1-C8-Alkylrest,
- j, k, l unabhängig voneinander 0, 1, 2 oder 3,
- 1 ≤ j+k+l ≤ 7 und
- der Rest -OB ein Polyalkylenoxidpolyetheralkoxyrest ist, worin die Alkylenoxide Ethylenoxid und/oder Propylenoxid sind
   oder
- der Rest -OB die Formel -O{(X)-(y)ₐ-(Z)} aufweist, wobei
   ∘ der Rest X sich
      ▪ von einem Hydroxypolyethylenglykolether der Summenformel HO(CH₂CH₂O)ₙT¹ mit n = 2 - 100 mit T¹ = H oder C₁-C₆-Alkyl,
      ▪ einer Hydroxyalkylcarbonsäure oder
      ▪ einer Hydroxypolyethersulfonsäure,
   ∘ a für 0 oder 1 steht,
   ∘ der Rest y sich, wenn vorhanden, von einem Di- oder Polyisocyanat, einem Di- oder Polycarbonsäurederivat, einem Di- oder Polyepoxid, einem Mono- oder Polyalkoxysilan, einem Epoxiisocyanat, einem Epoxyalkoxysilan oder einem Isocyanatosilan und
   ∘ der Rest Z sich
      - von einem hydroxyterminierten Polyether der Formel TO(CTHCH₂O)ₙ(CH₂CH₂O)ₚT', wobei T = -(CH₂)ₘCH₃ ist, n, m unabhängig voneinander = 0-20, p = 0-5 mit n größer oder gleich 4 mal p, und T' = H oder C₁-C₁₈-Alkyl,
      - einem oder mehreren, ggf. verzweigten und/oder Cyclen und/oder Heterotam(e) enthaltenden Hydroxykohlenwasserstoff mit 1 -18 Kohlenstoffatomen, oder
      - einem ggf. verzweigten und/oder Cyclen enthaltenden Alkylenoxid mit mindestens 4 Kohlenstoffatomen ableitet.

Entsprechende Verbindungen haben weiterhin den Vorteil, dass sie Lacken, in denen sie z.B. als Vernetzer eingesetzt werden, eine besonders gute Chemikalienstabilität verleihen. So können ohne Probleme Chemikalienbeständigkeiten von mind. 100 MEK-Doppelhüben erhalten werden.

Obwohl die Reste R¹, R² und R³ prinzipiell jeweils unabhängig voneinander lineare oder verzweigte und/oder cyclische C1-C8-Alkylenreste sein können, ist es bevorzugt, dass R¹, R² und R³ und identisch sind, d.h. R¹ = R² = R³. Ebenso kann jedes R', R" und R'" prinzipiell ein unterschiedlicher linearer oder verzweigter und/oder cyclischer C1-C8-Alkylrest sein. Bevorzugt sind jedoch alle Reste R', R" und R'" identisch. R¹, R², R³ und R',R" und R'" kann jeweils linear, verzweigt, cyclisch oder in Strukturen mit linearen bzw. verzweigten Strukturen mit cyclischen Anteilen vorliegen.

Bevorzugte alkoxysilan-haltige Isocyanurate der Formel (I) sind
1,3,5-Tris[3-(trimethoxysilyl)methyl]-1,3-5-triazin-2,4,6(1H, 3H, 5H)-trion,
1,3,5-Tris[3-(triethoxysilyl)methyl]-1,3-5-triazin-2,4,6(1H, 3H, 5H)-trion,
1,3,5-Tris[3-(tri-iso-propoxysilyl)methyl]-1,3-5-triazin-2,4,6(1H, 3H, 5H)-trion,
1,3,5-Tris[3-(trimethoxysilyl)ethyl]-1,3-5-triazin-2,4,6(1H, 3H, 5H)-trion,
1,3,5-Tris[3-(triethoxysilyl)ethyl]-1,3-5-triazin-2,4,6(1H, 3H, 5H)-trion,
1,3,5-Tris[3-(tri-iso-propoxysilyl)ethyl]-1,3-5-triazin-2,4,6(1H, 3H, 5H)-trion,
1,3,5-Tris[3-(trimethoxysilyl)propyl]-1,3-5-triazin-2,4,6(1H, 3H, 5H)-trion,
1,3,5-Tris[3-(triethoxysilyl)propyl]-1,3-5-triazin-2,4,6(1H, 3H, 5H)-trion,
1,3,5-Tris[3-(tri-iso-propoxysilyl)propyl]-1,3-5-triazin-2,4,6(1H, 3H, 5H)-trion,
1,3,5-Tris[3-(trimethoxysilyl)butyl]-1,3-5-triazin-2,4,6(1H, 3H, 5H)-trion
1,3,5-Tris[3-(triethoxysilyl)butyl]-1,3-5-triazin-2,4,6(1H, 3H, 5H)-trion
1,3,5-Tris[3-(tri iso-propoxysilyl)butyl]-1,3-5-triazin-2,4,6(1H, 3H, 5H)-trion, und Gemische daraus.

R', R" und R'" sind somit bevorzugt identisch und ausgewählt aus der Gruppe bestehend aus - CH3, -CH₂CH₃, -CH(CH3)CH3 und R¹ = R²= R³= -CH₂-, -CH₂CH₂-, -CH₂CH₂CH₂-, -CH₂CH₂CH₂CH₂-.

Besonders bevorzugte Verbindungen der Formel (I) sind 1,3,5-Tris[3-(triethoxysilyl)propyl]-1,3-5-triazin-2,4,6(1H, 3H, 5H)-trion, und 1,3,5-Tris[3-(trimethoxysilyl)propyl]-1,3-5-triazin-2,4,6(1H, 3H, 5H)-trion. Ganz besonders bevorzugt ist 1,3,5-Tris[3-(trimethoxysilyl)propyl]-1,3-5-triazin-2,4,6(1H, 3H, 5H)-trion. Entsprechend leitet sich die Verbindung der Formel (II) ganz bevorzugt von diesen Verbindungen der Formel (I) ab. Bevorzugt ist somit R¹ = R²= R³= -CH₂CH₂CH₂- und R' = R" = R'" ausgewählt aus der Gruppe bestehend aus -CH₃, -CH₂CH₃.

Geeignete Hydrophilierungsmittel der Formel BOH können ionische (kationische oder anionische) oder nicht-ionische Hydrophilierungsmittel sein. Bevorzugt sind nicht-ionische Hydrophilierungsmittel. Das Hydrophilierungsmittel der Formel BOH ist weiterhin dadurch gekennzeichnet, dass es mindestens eine OH-Gruppe trägt. Insbesondere können Mono- und/oder Dihydroxycarbonsäuren, Hydroxysulfonsäuren, mono- oder dihydroxyfunktionelle Carbonsäureamide und mono-hydroxyfunktionelle Alkylethoxylate eingesetzt werden. Bevorzugt weist das Hydrophilierungsmittel genau eine OH-Gruppe auf. Bevorzugt handelt es sich bei dem Rest B also um einen von einer Mono- oder Dihydroxycarbonsäure, einem mono- oder dihydroxyfunktionellen Carbonsäureamid oder einem monohydroxyfunktionellen Alkylethoxylat abgeleiteten Rest.

Bevorzugte Beispiele für geeignete nicht-ionische Hydrophilierungsmittel BOH sind Polyalkylenoxidpolyetheralkohole, wie sie in an sich bekannter Weise durch Alkoxylierung geeigneter Startermoleküle zugänglich sind. Bevorzugt ist also der Rest -OB des Hydrophilierungsmittels ein Polyalkylenoxidpolyetheralkylrest. Zur Herstellung der Polyalkylenoxidpolyetheralkohole können beliebige einwertige Alkohole des Molekulargewichtsbereichs 32 bis 150, wie sie beispielsweise auch gemäss EP 206 059 B1 Verwendung finden, als Startermoleküle eingesetzt werden. Besonders bevorzugt wird Methanol als Startermolekül verwendet. Für die Alkoxylierungsreaktion geeignete Alkylenoxide sind Ethylenoxid und Propylenoxid, die in beliebiger Reihenfolge oder auch im Gemisch bei der Alkoxylierungsreaktion eingesetzt werden können. Bevorzugte Polyalkylenoxidpolyetheralkohole sind entweder reine Polyethylenoxidpolyetheralkohole oder gemischte Polyalkylenoxidpolyetheralkohole, deren Alkylenoxideinheiten zu mindestens 70 Mol-%, vorzugsweise zu mindestens 80 Mol-% aus Ethylenoxideinheiten bestehen. Besonders bevorzugte Polyalkylenoxidpolyetheralkohole sind reine Polyethylenglykolmonomethyletheralkohole, die im statistischen Mittel 5 bis 30, besonders bevorzugt 6 bis 15 Ethylenoxideinheiten aufweisen. Bevorzugte Reste -OB sind also Polyethylenglykolmonomethyletheralkoxyreste mit im statistischen Mittel 5 bis 30, besonders bevorzugt 6 bis 15, Ethylenoxideinheiten.

Beispiele für entsprechende im Handel erhältliche einsetzbare Polyalkylenoxidpolyetheralkohole sind die Polyglykole M350, M350 PU (niedrigerer Wassergehalt als M350), M500, M500 PU, M750, M1000 der Firma Clariant (lineare, monohydroxy-funktionelle Polyethylenglykolmonomethylether mit jeweiligen Molmassen von ca. 350 g/mol, 500 g/mol, 750 g/mol bzw. 1000 g/mol). Bevorzugt werden lineare, monohydroxy-funktionelle Polyethylenglykolmonomethylether mit Molmassen von ca. 350 g/mol bis 500 g/mol eingesetzt.

Ebenfalls bevorzugte Reste -OB leiten sich ab von Verbindungen, die ähnlich sind zu den in WO 2011/144644 A1 beschriebenen Hydrophilierungsmitteln. Bevorzugte Hydrophilierungsmittel sind demnach Verbindungen BOH mit B = (X)-(y)ₐ-(Z). Bevorzugte Reste -OB weisen somit die Formel -O{(X)-(y)ₐ-(Z)} auf.

Dabei bedeutet X eine oder mehrere hydrophile Struktureinheiten, y einen optionalen Spacer, a 0 oder 1, und Z eine oder mehrere hydrophobe Struktureinheiten.

Das Hydrophilierungsmittel kann gebildet werden durch Reaktion von X', ggf. y' und Z'.

X', y' und Z' enthalten funktionale Gruppen, die komplementär zueinander sind, so dass eine Reaktion dieser funktionalen Gruppen zu kovalenten Bindungen und damit zum Hydrophilierungsmittel der Formel HO{(X)-(y)ₐ-(Z)} führt. Das Hydrophilierungsmittel enthält dabei mindestens eine oder mehrere OH-Gruppen. In einer bevorzugten Ausführungsform liegt diese OH-Gruppe in etwa oder genau zwischen X und Z. Diese OH-Gruppen kann schon in X', y' oder Z' vorhanden gewesen sein. Bevorzugt entsteht diese OH-Gruppe aber aus der Reaktion von X', gegebenenfalls y' und Z'. Der hydrophile Strukturbestandteil X geht aus der Stoffklasse X' hervor. X' besitzt mindestens eine funktionelle Gruppe, die mit y' oder Z' reagieren kann und ist, eventuell nach Neutralisation möglicherweise vorhandener ionogener (neutralisierbarer) Gruppen, für sich allein wasserlöslich oder wasserdispergierbar, also hydrophil, gemäß der oben beschriebenen Definition von "wasserlöslich" und "wasserdispergierbar".

Bevorzugt handelt es sich bei X' um
a) einen Hydroxypolyether, der überwiegend Polyethylenglykoleinheiten enthält, wobei reine Hydroxypolyethylenglykolether der Summenformel HO(CH₂CH₂O)ₙT¹ mit n = 2- 100, bevorzugt n = 2-50 gehorchen, wobei T¹ entweder H oder eine Alkylgruppe mit 1 - 6 C-Atomen bedeutet; und/oder
b) eine oder mehrere Verbindungen mit ionogenen Gruppen, insbesondere Carbonsäuregruppen oder Sulfonsäuregruppen. Als Carbonsäuren kommen bevorzugt Hydroxyalkylcarbonsäuren, insbesondere Dimethylolpropionsäure, Hydroxyessigsäure, Hydroxypropionsäure oder Hydroxybuttersäure in Frage. Als Sulfonsäure kommen bevorzugt Hydroxyalkylsulfonsäuren oder Hydroxypolyethersulfonsäuren in Frage.

Als Neutralisationsmittel für die säuregruppenhaltigen ionogenen Gruppen b) kommen bevorzugt Alkali- oder Erdalkalihydroxide in Frage.

Sowohl a) als auch b) weisen mindestens eine oder mehrere OH-Gruppen auf. Bevorzugt ist genau eine OH-Gruppe.

Auch Kombinationen aus a) und b) sind möglich.

Als X' Komponente a) werden bevorzugt alkanolgestartete Polyalkylenoxidmonoalkohole eingesetzt. Diese Verbindungen sind auch kommerziell erhältlich z. B. als Polyglykol M 250, M 350, M350 PU, M 500, M 500 PU, M 750, M 1 100 von Clariant. Zur Herstellung des alkanolgestarteten Polyalkylenoxidmonoalkohols X' aus einem Ausgangsalkohol mit 1 - 6 Kohlenstoffatomen wird an diesen zunächst Ethylenoxid und/oder Propylenoxid angelagert. Bei Einsatz beider Alkylenoxide kann die Anlagerung dabei sowohl statistisch, blockweise, als auch als Gradient erfolgen.

Bei der statistischen Anlagerung wird ein Gemisch aus den gewünschten Anteilen Ethylenoxid und Propylenoxid an den Startalkohol addiert. Bei der blockweisen Anlagerung werden die Komponenten jeweils voneinander in getrennten Stufen angelagert. Bei der Gradientenanlagerung werden beide Alkylenoxide gleichzeitig oder mit variabler relativer Dosiergeschwindigkeit zudosiert.

Bevorzugt besteht X' ausschließlich aus Polyethylenglykoleinheiten (Variante a) und wird durch die Formel HO(CH₂CH₂O)ₙT¹ beschrieben, dabei bedeutet T¹= -(CH₂)ₘCH₃. Besonders bevorzugt ist m = 0-3. Dabei ist n = 2-100, bevorzugt n = 2-50 und besonders bevorzugt n = 2-25. Diese bevorzugte Komponente X' zur Herstellung des Emulgators B) ist ein alkanolgestarteter Polyethylenoxidmonoalkohol.

Bei der optionalen Komponente y' handelt es sich um einen mindestens difunktionellen Spacer, der in der Lage ist, sowohl mit X' als auch mit Z' zu reagieren. Dabei kann es sich bevorzugt um ein Di- oder Polyisocyanat, Di- oder Polycarbonsäurederivat, Di- oder Polyepoxid oder um ein Mono- oder Polyalkoxysilan handeln. Auch gemischte Funktionalitäten sind denkbar, insbesondere ein Epoxyisocyanat, ein Epoxyalkoxysilan, ein Isocyanatosilan.

Der hydrophobe Strukturbestandteil Z geht aus der Stoffklasse Z' hervor. Z' besitzt mindestens eine funktionelle Gruppe, die mit y' oder X' reagieren kann, und ist, für sich allein, wasserunlöslich, also hydrophob. Bevorzugt steht Z' für
a) einen hydroxyterminierten Polyether, der eine oder mehrere verschiedene Polyglykoleinheiten TO(CTHCH₂O)ₙ(CH₂CH₂O)ₚT' enthält bzw. daraus besteht, bevorzugt daraus besteht, wobei T ein Kohlenwasserstoffrest der Formel -(CH₂)ₘCH₃, n und m unabhängig voneinander = 0-20 und p = 0-5 mit n größer oder gleich 4 mal p sowie T' unabhängig voneinander entweder H oder Alkyl mit 1 - 18 Kohlenstoffatomen bedeutet; und/oder
b) einen oder mehrere Hydroxykohlenwasserstoffe mit 1 -18 Kohlenstoffatomen, die auch verzweigt sein und/oder Cyclen und/oder Heteroatome enthalten können, insbesondere Hexanol, Octanol, Decanol, und/oder Dodecanol und weitere Homologe, und/oder
c) ein Alkylenoxid, welches auch verzweigt sein und/oder Cyclen enthalten kann, mit mindestens 4 Kohlenstoffatomen. In Frage kommen hier insbesondere Butylenoxid, Pentenepoxid, Hexenepoxid, Heptenepoxid, Octenepoxid, Nonenepoxid, Decenepoxid, Undecenepoxid, und/oder Dodecenepoxid und weitere Homologe.

Bevorzugt werden als Z' Alkylenoxide c) (Epoxide) mit 8-14 Kohlenstoffatomen.

Sowohl a), b) als auch c) weisen mindestens eine oder mehrere OH- Gruppen oder sonstige gegenüber X' oder y' reaktive Gruppen auf. Bevorzugt ist die Variante c).

Auch Kombinationen aus a), b) und c) sind möglich.

Wesensmerkmal von Z' ist es, dass es für sich allein nicht wasserlöslich oder wasserdispergierbar ist. Bevorzugt weist Z' einen Kohlenwasserstoff mit mindestens 8 Kohlenstoffatomen und mindestens einer Epoxidgruppe auf.

Die Reste X, y und Z des genannten bevorzugten Restes -O{(X)-(y)ₐ-(Z)} leiten sich somit entsprechend von den zur Erzeugung des Hydrophilierungsmittels verwendeten Verbindungen X', ggf. y' und Z' ab.

Bevorzugt wird weiterhin ein Isocyanurat mit mindestens einem Rest-O{(X)-(y)ₐ-(Z)}, bei dem der Rest X sich
- von einem Hydroxypolyethylenglykolether der Summenformel HO(CH₂CH₂O)ₙT¹ mit n = 2 - 100 mit T¹ = H oder C₁-C₆-Alkyl,
- einer Hydroxyalkylcarbonsäure oder
- einer Hydroxypolyethersulfonsäure,
   der Rest y sich, wenn vorhanden, von einem Di- oder Polyisocyanat, einem Di- oder Polycarbonsäurederivat, einem Di- oder Polyepoxid, einem Mono- oder Polyalkoxysilan, einem Epoxiisocyanat, einem Epoxyalkoxysilan oder einem Isocyanatosilan und
   der Rest Z sich
- von einem hydroxyterminierten Polyether der Formel TO(CTHCH₂O)ₙ(CH₂CH₂O)ₚT', wobei T = -(CH₂)ₘCH₃ ist, n, m unabhängig voneinander = 0-20, p = 0-5 mit n größer oder gleich 4 mal p, und T' = H oder C₁-C₁₈-Alkyl,
- einem oder mehreren, ggf. verzweigten und/oder Cyclen und/oder Heterotam(e) enthaltenden Hydroxykohlenwasserstoff mit 1 -18 Kohlenstoffatomen, oder
- einem ggf. verzweigten und/oder Cyclen enthaltenden Alkylenoxid mit mindestens 4 Kohlenstoffatomen ableitet.

Bevorzugt enthält das Hydrophilierungsmittel genau eine OH-Gruppe.

In der Folge wird eine ganz besonders bevorzugte Ausführungsform des Hydrophilierungsmittels beschrieben, in der X eine alkanolgestartete Polyethylenglykoleinheit und Z einen längeren Kohlenwasserstoffrest und eine Alkoholgruppe enthält.

In dieser ganz bevorzugten Ausführungsform entspricht das Hydrophilierungsmittel der Formel X-G-D-H (wobei -G-D-H = Z),
wobei
- X sich von einem Hydroxypolyalkylenglykolether der Summenformel HO(CH₂CH₂O)ₙT¹ mit n = 2 - 100 mit T¹ = H oder C₁-C₆-Alkyl, ableitet, und
- G ein Strukturelement der Formel (III) bedeutet 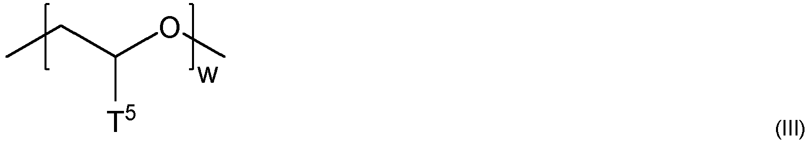 wobei T⁵ unabhängig voneinander ein gesättigter, ungesättigter, verzweigter oder unverzweigter, substituierter oder unsubstituierter Kohlenwasserstoffrest mit mindestens 2 Kohlenstoffatomen, bevorzugt 6-12 Kohlenstoffatomen, und w größer oder gleich eins ist;
- D ein Oxyethylenrest oder Oxypropylenrest der Formel -(CH₂CHT⁶O)_{w}, wobei w größer oder gleich 0, bevorzugt 0 - 2, und T⁶ = H oder CH₃, ist;
   und
- H = Wasserstoff ist.

Bevorzugt ist w 1 -20, besonders bevorzugt 1 -5, ganz besonders bevorzugt 1 -2. Zur Herstellung des alkanolgestarteten Polyalkylenglykolmonoalkohols aus einem Ausgangsalkohol mit 1 -6 Kohlenstoffatomen wird an diesen zunächst Ethylenoxid und/oder Propylenoxid angelagert. Bei Einsatz beider Alkylenoxide kann die Anlagerung dabei sowohl statistisch, blockweise, als auch als Gradient erfolgen. Bei der statistischen Anlagerung wird ein Gemisch aus den gewünschten Anteilen Ethylenoxid und Propylenoxid an den Startalkohol addiert. Bei der blockweisen Anlagerung werden die Komponenten jeweils voneinander in getrennten Stufen angelagert. Bei der Gradientenanlagerung werden beide Alkylenoxide gleichzeitig oder mit variabler relativer Dosiergeschwindigkeit zudosiert.

Bevorzugt besteht der Polyalkylenglykolmonoalkohol ausschließlich aus Polyethylenglykoleinheiten (Variante a) und wird durch die Formel HO(CH₂CH₂O)ₙT¹ mit T¹ = -(CH₂)ₘCH₃ beschrieben. Besonders bevorzugt ist m = 0-3. Dabei ist n = 2-100, bevorzugt n = 2-50 und besonders bevorzugt n = 2-25.

Diese bevorzugte Komponente zur Herstellung des Hydrophilierungsmittels ist ein alkanolgestarteter Polyethylenoxidmonoalkohol.

Solch ein alkanolgestarteter Polyalkylenglykolmonoalkohol (entspricht X', auch kommerziell erhältlich als z.B. Polyglykol M 250, M 350, M350 PU, M 500, M 500 PU, M 750, M 1 100 von Clariant) wird vorgelegt und unter dem Fachmann bekannten, geeigneten Bedingungen mit einem oder mehreren Epoxiden mit längerer Alkylkette mit mindestens 3 Kohlenstoffeinheiten, bevorzugt mindestens 4 Kohlenstoffeinheiten, umgesetzt. Nach erfolgter Ringöffnung kann der entstehende sekundäre Alkohol optional noch mit Ethylenoxid oder Propylenoxid unter den gleichen Bedingungen umgesetzt werden. So entsteht ein Molekül mit einer hydrophilen Einheit, mit dem Rest des alkanolgestarteten Polyalkylenglykolmonoalkohols aus X', für sich allein wasserlöslich, und einer hydrophoben Einheit, mit dem Rest des Epoxids mit längerer Alkylkette Y', für sich allein wasserunlöslich, wobei während der Verknüpfung der beiden Einheiten eine Alkoholgruppe entsteht, die für die Anknüpfung an das alkoxysilanhaltiges Isocyanurat benötigt wird.

Auf diese Weise werden die Hydrophilierungsmittel der ganz besonders bevorzugten Ausführungsform erhalten.

Gegenstand der vorliegenden Erfindung ist weiterhin auch ein Verfahren zur Herstellung eines erfindungsgemäßen hydrophil modifizierten alkoxysilanhaltigen Isocyanurats, bei dem mindestens ein alkoxysilanhaltiges Isocyanurat der Formel (I) 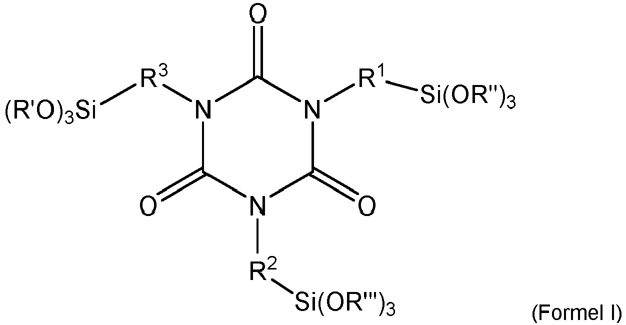 mit mindestens einem Hydrophilierungsmittel der Formel BOH, das mindestens eine OH-Gruppe aufweist und die Gruppe -OB wie oben beschrieben definiert ist, umgesetzt wird, wobei R¹, R² und R³ jeweils unabhängig voneinander ein linearer, verzweigter oder cyclischer C1-C8-Alkylenrest, R', R" und R'" jeweils unabhängig voneinander ein linearer, verzweigter oder cyclischer C1-C8-Alkylrest und B ein hydrophiler Rest ist.

Die Umsetzung kann prinzipiell in Gegenwart von Lösemittel oder lösemittelfrei erfolgen. Bevorzugt wird das Verfahren lösungsmittelfrei durchgeführt. Weiterhin kann die Umsetzung diskontinuierlich oder kontinuierlich erfolgen. Die Reaktion kann in geeigneten Aggregaten durchgeführt werden, insbesondere in Rührkesseln, Extrudern, Statikmischern und Knetkammern, jeweils mit Destillationsbrücke zwecks destillativen Abtrennung des freiwerdenden Alkohols. Bevorzugt kann die Abtrennung des freiwerdenden Alkohols durch verminderten Druck, eine Vergrößerung der Oberfläche oder durch Durchleiten eines inerten Gasstroms erleichtert werden. Die Reaktion wird bei Temperaturen im Bereich von 80°C bis 200 °C, insbesondere im Bereich von 120 bis 180 °C, ganz besonders bevorzugt im Bereich von 140 bis 160°C durchgeführt. Die Reaktion wird unter Ausschluss von Wasser durchgeführt. Bevorzugt wird die Reaktion unter Stickstoff durchgeführt, besonders bevorzugt wird der Stickstoff kontinuierlich von dem Reaktionsgefäß in Richtung Destillationsbrücke gespült.

Zur Beschleunigung der Reaktion können bekannte Katalysatoren C) für die Veresterung eingesetzt werden. Typische Katalysatoren sind Organotitan- oder-zinnverbindungen wie Tetrabutyltitanat oder Dibutylzinnoxid. Denkbar sind auch Katalysatoren, die auf anderen Metallen wie z.B. Zink, Antimon oder Mangan basieren, beispielsweise Mangan-(II)-acetylacetonat. Ebenfalls ist der Einsatz von metallfreien Veresterungskatalysatoren möglich.

Weiterhin ist die Zugabe weiterer Additive und Fahrhilfsmittel wie Antioxidantien oder Farbstabilisatoren möglich.

Erfindungsgemäß wird das alkoxysilanhaltige Isocyanurat der Formel (I) und das Hydrophilierungsmittel BOH im molaren Verhältnis (I) / BOH von 15: 1 bis 1: 7, bevorzugt von 5 : 1 bis 1 : 1, besonders bevorzugt von 2,7 : 1 eingesetzt. Der Katalysator C) wird bevorzugt in Mengen von 0,0% bis 1,0%, besonders bevorzugt in Mengen von 0,1 - 0,5% eingesetzt.

Prozentangaben beziehen sich hier und im Folgenden, sofern nicht anderweitig angegeben, auf Gewichtsprozente.

Der Umsatz der Reaktion kann anhand der freigesetzten Alkoholmenge, die während der Umesterung entsteht, gravimetrisch verfolgt werden. Der Umsatz des erfindungsgemäßen Verfahrens zur Herstellung erfindungsgemäßen hydrophilen Vernetzers U) beträgt mindestens 25 %, bevorzugt mind. 50 %, besonders bevorzugt mind. 85%.

Gegenstand der vorliegenden Erfindung ist weiterhin die Verwendung der erfindungsgemäßen Verbindungen als Bestandteil von Beschichtungs- oder Kunststoffformulierungen. Unter Beschichtungsformulierungen sind dabei hier und im folgenden insbesondere Lack-, Klebstoff- und Dichtstoffformulierungen zu verstehen.

Vorteilhaft können die erfindungsgemäßen Verbindungen dabei als Vernetzer eingesetzt werden. Gegenstand der Erfindung ist somit auch die Verwendung der erfindungsgemäßen Verbindungen als Vernetzer, insbesondere in Kunststoff- und Beschichtungsformulierungen.

Weiterhin wurde überraschend festgestellt, dass den erfindungsgemäßen hydrophilen Verbindungen vor der Emulgierung noch weitere nicht hydrophilierte Alkoxysilane, Polyisocyanate oder andere hydrophobe Lackadditive zugesetzt werden können. In solchen Mischungen können die erfindungsgemäßen hydrophilen Verbindungen die Funktion eines Emulgators für den nachträglich zugemischten Anteil an nicht hydrophilen Vernetzern, z.B. nicht hydrophilierten alkoxysilanhaltigen Isocyanuraten, übernehmen. Gegenstand der vorliegenden Erfindung ist somit auch die Verwendung der erfindungsgemäßen Verbindungen als Emulgator, insbesondere in Kunststoff- und Beschichtungsformulierungen.

Weiterhin Gegenstand der Erfindung sind Beschichtungs- oder Kunststoffformulierungen umfassend mindestens eine erfindungsgemäße Verbindung. Bevorzugt können die Formulierungen weiterhin Isocyanurate der Formel (I) 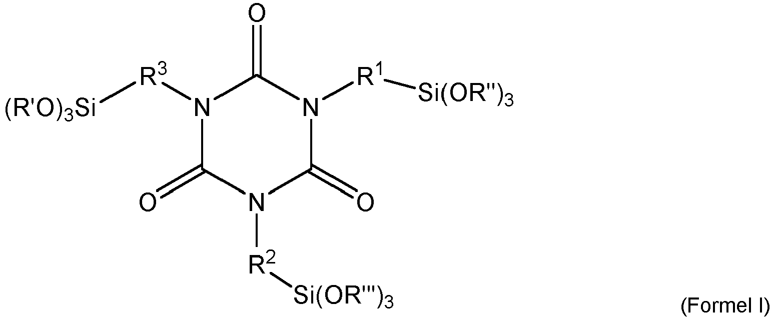 aufweisen, da die erfindungsgemäßen Verbindungen überraschenderweise besonders gut als Emulgator für diese Verbindungen geeignet sind. Besonders bevorzugt beträgt dabei das molare Verhältnis der erfindungsgemäßen Verbindungen zu den Verbindungen der Formel (I) 100:1 bis 1:14, bevorzugt 10:1 bis 1:5.

Gegenstand der Erfindung ist auch die Verwendung der erfindungsgemäßen Verbindungen zur Herstellung von Polyurethan-Kunststoffen, insbesondere als Vernetzer für wasserlösliche oder wasserdispergierbare Lackbindemittel, Klebstoffbindemittel, oder Dichtstoffbindemittel oder Bindemittelkomponenten mit oder ohne Hydroxyl-Gruppen. Insbesondere eignen sich die erfindungsgemäßen Verbindungen als Vernetzer für wasserlösliche oder wasserdispergierbare Lackbindemittel oder Lackbindemittelkomponenten, insbesondere für 2K-PUR-Systeme, sowie zur Herstellung von Überzügen unter Verwendung von wässrigen Beschichtungsmitteln auf Basis derartiger Bindemittel oder Bindemittelkomponenten, insbesondere für 2K-PUR-Systeme.

Die erfindungsgemäßen Verbindungen stellen wertvolle Ausgangsmaterialien zur Herstellung von Polyurethan- und/oder Acrylat-Kunststoffen dar, weil sie über intermolekulare Siloxan-Bindungen ein interpenetrierendes Netzwerk bilden oder über eine Umesterungsreaktion an die OH-Funktionen des Kunststoffes anbinden können, wobei neue Si-O-Bindungen entstehen können.

Hierzu werden die erfindungsgemäßen Verbindungen vorzugsweise in Form wässriger Dispersionen oder Emulsionen eingesetzt, die in Kombination mit in Wasser dispergierten Polyhydroxylverbindungen als wässrigen Zweikomponenten-Systemen (2K) zur Umsetzung gebracht werden können.

Besonders bevorzugt werden die erfindungsgemäßen Verbindungen als Vernetzer für in Wasser gelöste oder dispergierte Lackbindemittel oder Lackbindemittelkomponenten mit Hydroxyl-Gruppen und bei der Herstellung von Beschichtungen unter Verwendung von wässrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vorder Verarbeitung der Beschichtungsmittel nach beliebigen Methoden, durch Verwendung von dem Fachmann bekannten mechanischen Hilfsmitteln oder auch unter Verwendung von Zweikomponenten-Spritzpistolen erfolgen.

In diesem Zusammenhang seien als Lackbindemittel oder Lackbindemittelkomponenten beispielhaft erwähnt: In Wasser gelöste oder dispergierte, Hydroxylgruppen aufweisende Polyacrylate, insbesondere solche des Molekulargewichtsbereichs 1 000 bis 10 000, die mit den Alkoxysilan-funktionalisierten erfindungsgemäßen hydrophilen Verbindungen als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Verbindungen alle in Wasser gelösten oder dispergierten Bindemittel, die OH-Gruppen aufweisen, geeignet.

Bei der erfindungsgemäßen Verwendung als Vernetzerkomponente für wässrige Lackbindemittel und in den erfindungsgemäßen Beschichtungs- und Kunststoffformulierungen werden die erfindungsgemäßen hydrophilen Verbindungen im allgemeinen in Mengen von 0,5% bis 20%, bevorzugt von 2,5 bis 15%, besonders bevorzugt von 8% bis 12% eingesetzt.

Auch nichtfunktionellen wässrigen Lackbindemitteln können die erfindungsgemäßen hydrophilen Verbindungen in untergeordneten Mengen zur Erzielung ganz spezieller Eigenschaften, beispielsweise als Additiv zur Haftverbesserung, zugemischt werden. Selbstverständlich können die erfindungsgemäßen Vernetzer auch in mit aus der Polyurethanchemie an sich bekannten blockierten Polyisocyanaten in Kombination mit den obengenannten wässrigen Lackbindemitteln oder Lackbindemittelkomponenten im Sinne von wässrigen Einkomponenten-PUR-Einbrennsystemen (1K-PUR) eingesetzt werden.

Als Untergründe für die mit Hilfe der erfindungsgemäßen Verbindungen formulierten wässrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Verbindungen formulierten wässrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, zugegeben werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260°C aushärten. Aufgrund ihrer hervorragenden Dispergierbarkeit oder Emulgierbarkeit in Wasser, die eine homogene, besonders feinteilige Verteilung in wässrigen Lackbindemitteln ermöglicht, führt die Verwendung der erfindungsgemäßen Verbindungen als Vernetzerkomponente für wässrige Polyurethanlacke zu Beschichtungen mit hervorragenden optischen Eigenschaften, insbesondere hohem Oberflächenglanz, Verlauf und hoher Transparenz.

Neben der Verwendung als Vernetzerkomponenten für wässrige 2K-PUR-Lacke eignen sich die erfindungsgemäßen Verbindungen hervorragend als Vernetzer für wässrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

Außerdem werden die erfindungsgemäßen Verbindungen aufgrund ihrer hervorragenden Dispergierbarkeit oder Emulgierbarkeit in Wasser auch als Zusatzstoffe in wässrigen Polyurethandispersionen verwendet.

Die erfindungsgemäßen Verbindungen, Verfahren zu deren Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnehmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

In den nachfolgend aufgeführten Beispielen wird die vorliegende Erfindung beispielhaft beschrieben.

### Beispiele

Sofern nicht anders angegeben, beziehen sich die Mengenangaben in Prozent in den Beispielen auf das Gewicht.

### Einsatzstoffe:

**Bona Traffic HD:** Bindemittelkomponente der 2-Komponentigen Polyurethan-Dispersion (Bona Vertriebsgesellschaft mbH Deutschland)
**Bona Traffic Hardener:** hydrophiles, aliphatisches Polyisocyanat, als Härterkomponente für Bona Traffic HD (Bona Vertriebsgesellschaft mbH Deutschland)
**Dynasylan® VPS 7161:** Isocyanatopropyltrimethoxysilan-Trimer (Evonik Resource Efficiency GmbH)
**Dynasylan® Hydrosil 2926:** Reaktives organofunktionelles Siloxanoligomer in Wasser (Evonik Resource Efficiency GmbH)
**Dynasylan® Sivo 160:** wasserbasierter, aminmodifiziertes Silicon (Evonik Resource Efficiency GmbH)
**Polyglykol M500 PU:** linearer, mono hydroxy-funktioneller Polyethylenglycol Monomethylether (Clariant International Ltd.)
**Vestanat® EP Cat 11 H:** Tetraethylammoniumbenzoat in Wasser (Evonik Resource Efficiency GmbH)

### 1. Herstellung hydrophiler Vernetzer

### Beispiel 1

### hydrophiler Vernetzer U1

Es wurden 620,24 g Dynasylan VPS 7161 und 179,76 g Polyglykol M500 PU in einem Dreihalskolben mit Destillationsbrücke vorgelegt und mit Stickstoff abgedeckt. Unter Rühren wurde auf 150°C erhitzt und die Temperatur unter leichtem Stickstoffstrom 10 Stunden gehalten. Nach Abdestillieren von 9,6 g Methanol, was einem Umsatz von 81 % entspricht, wurde abgekühlt und der hydrophile Vernetzer U1 als gelbe Flüssigkeit mit einer Viskosität von 216 mPas (bei 23°C) erhalten.

### Beispiel 2

### hydrophiler Vernetzer U2

### a) Synthese des Emulgators B für den hydrophilen Vernetzer U2

In einem 3 Liter Autoklaven werden 800 g Polyglykol M500 PU und 8,4 g Kaliummethanolat unter Stickstoff vorgelegt und unter Rühren auf 115 °C aufgeheizt. Der Reaktor wird bis auf einen Innendruck von 30 mbar evakuiert, um evtl. vorhandene flüchtige Inhaltsstoffe destillativ zu entfernen. Bei 115 °C werden 474,7 g Dodecenoxid innerhalb 15 min bei 115 °C zudosiert. Innerhalb der nachfolgenden 2,5 h Nachreaktionszeit wird die Innentemperatur auf 125 °C gesteigert. Es schließt sich die Entgasungsstufe an, bei der flüchtige Anteile wie restliches Alkylenoxid im Vakuum abdestilliert werden. Der noch alkalische Polyether wird auf 95 °C abgekühlt und im Vakuum bei ca. 20 mbar desodoriert. Anschließend wird mit wässeriger Phosphorsäure neutralisiert. Nachfolgend wird bei 115 °C und unter vermindertem Druck Wasser abdestilliert. Nach Abkühlen auf < 80 °C wird das Endprodukt über einen Filter aus dem Reaktor abgelassen.

Der erhaltene Emulgator hat eine OH-Zahl von 74 mg KOH/g und eine mittlere Molmasse von 760 g/mol. Freie Epoxidgruppen sind im Endprodukt nicht nachweisbar. Die Säurezahl beträgt 0,1 mg KOH/g.

### b) Synthese des hydrophilen Vernetzer U2

Es wurden 275,04 g Dynasylan VPS 7161 und 124,96 g des Hydrophilierungsmittels gemäß b) in einem Dreihalskolben mit Destillationsbrücke vorgelegt und mit Stickstoff abgedeckt. Unter Rühren wurde auf 150°C erhitzt und die Temperatur unter leichtem Stickstoffstrom 12 Stunden gehalten. Nach Abdestillieren von 4,9 g Methanol, was einem Umsatz von 93 % entspricht, wurde abgekühlt und der hydrophile Vernetzer U2 als klare, hellbraune Flüssigkeit mit einer Viskosität von 333 mPas (bei 23°C) erhalten.

### Beispiel 3

### hydrophiler Vernetzer U3 (Si-UM-Wasser 21)

Bei Raumtemperatur wurden 25,0 g hydrophiler Vernetzer U1 mit 16,1 g Dynasylan VPS 7161 unter Rühren homogenisiert. Der nach dem Mischen erhaltene hydrophile Vernetzer U3 ist eine klare, hellgelbe Flüssigkeit und wurde anschließend für den Stabilitätstest (s.u.) eingesetzt.

### Beispiel 4 (nicht erfindungsgemäß)

### Mischung aus Dynasylan VPS 7161 und Polyglykol M500 PU

Bei Raumtemperatur wurden 25,5 g Dynasylan VPS 7161 mit 4,5 g Polyglykol M500 PU unter Rühren homogenisiert. Das erhaltene Gemisch wurde anschließend für den Stabilitätstest (s.u.) eingesetzt.

### Beispiel 5 (nicht erfindungsgemäß)

### Mischung aus Dynasylan VPS 7161 und Polyglykol M350 PU

Bei Raumtemperatur wurden 25,5 g Dynasylan VPS 7161 mit 4,5 g Polyglykol M350 unter Rühren homogenisiert. Das erhaltene Gemisch wurde anschließend für den Stabilitätstest (s.u.) eingesetzt.

### Beispiel 6 (nicht erfindungsgemäß)

### Mischung aus Dynasylan VPS 7161 und Emulgator B (s. Beispiel 2)

Bei Raumtemperatur wurden 24 g Dynasylan VPS 7161 mit 6 g Emulgator B unter Rühren homogenisiert. Das erhaltene Gemisch wurde anschließend für den Stabilitätstest (s.u.) eingesetzt.

### 2. Einrührbarkeit in Wasser und Standzeit

Die in Beispiel 1 -6 hergestellten Produkte sowie die handelsüblichen Produkte Dynasylan VPS 7161 und Bona Traffic Hardener werden in einer 250 ml Weithalsflasche mit 30 Gew.-% am Schnellrührer in Wasser eingerührt (2 min bei 1000 U/min und zusätzlich 1 min bei 1500 U/min) und bei Raumtemperatur stehengelassen.

Zur Ermittlung der Standzeit wurden die Proben, die Beispiele 1-6 oder Dynasylan VPS 7161 enthalten, visuell beobachtet und regelmäßig mit einem Holzspatel die Oberfläche hinsichtlich Gelbildung geprüft. Gemessen wird die Zeit bis zum Vergelen der Probe, welches das Ende der Standzeit in Wasser angibt. Das Vergelen ist ein Zeichen für eine starke Si(OR)₃ / Wasser Reaktion. Die Probe wird als "vergelt" eingestuft, wenn sie als homogener Gelkörper vorliegt, also als elastischer, schnittfester Feststoff/Masse.

Bei dem Produkt Bona Traffic Hardener handelt es sich um ein hydrophiles Polyisocyanat. Hier wird die Standzeit in Wasser über die Schaumbildung, welche die Reaktion zwischen Wasser und der Isocyanatfunktion unter Bildung von Kohlendioxid anzeigt, definiert.

**Tabelle 1: Einrührbarkeit in Wasser und Standzeiten**

| **HPIC** | **Aussehen nach dem Einrühren.** | **Standzeit in Wasser** |
|---|---|---|
| Dynasylan VPS 7161 | Schlecht, sofortige Phasentrennnung | n.b. |
| Traffic Hardener | Gut, feinteilige Dispersion | > 3 h |
| **Beispiel 1** (hydrophiler Vernetzer U1) | Gut, feinteilige Dispersion | 30 min |
| **Beispiel 2** (hydrophiler Vernetzer U2) | Gut, feinteilige Dispersion | > 3 h |
| **Beispiel 3** (hydrophiler Vernetzer U3) | Gut, feinteilige Dispersion | 16 min |
| **Beispiel 4 (Vergleich)** | Schlecht, sofortige Phasentrennnung | n.b.* |
| **Beispiel 5 (Vergleich)** | Schlecht, sofortige Phasentrennnung | n.b.* |
| **Beispiel 6 (Vergleich)** | Schlecht, sofortige Phasentrennnung | n.b* |
| **Dynasylan Hydrosil 2926 (Vergleich)** | Klare Lösung | > 3 h |
| **Dynasylan Sivo 160 (Vergleich)** | Klare Lösung | > 3 h |

| | | |
|---|---|---|
| *n.b. = nicht bestimmt, weil keine Dispersion vorlag. | | |

Die erfindungsgemäßen hydrophilen Vernetzer U1, U2 und U3 lassen sich genauso gut in Wasser eindispergieren wie das kommerziell erhältlichen hydrophile Polyisocyanat Traffic Hardener (s. Tabelle 1).

Die nicht erfindungsgemäßen Beispiele 4-6 zeigen, dass keine stabile Dispersion zu erreichen ist, wenn das Hydrophilierungsmittel nur als physikalische Mischung neben dem alkoxysilanhaltigen Isocyanurat A), hier als Dynasylan VPS7161, vorliegt. Überraschenderweise wird nur eine stabile Dispersion erhalten, wenn das Hydrophilierungsmittel chemisch mittels Umesterung an das alkoxysilanhaltigen Isocyanurat A), hier als Dynasylan VPS7161, angebaut wurde und somit als erfindungsgemäßer hydrophiler Vernetzer U vorliegt.

Der erfindungsgemäße hydrophile Vernetzer U2 zeigt eine Stabilität von > 3 h in Wasser und ist somit in Wasser genauso stabil wie die kommerziell erhältlichen hydrophilen Polyisocyanate (Beispiel: BonaTraffic Hardener).

Überraschenderweise besitzt der hydrophile Vernetzer U3, der einen geringeren Anteil an Hydrophilierungsmittel hat, eine höhere Reaktivität als der hydrophile Vernetzer U1.

### 3. Herstellung eines RT-härtender Klarlacks mittels hydrophilen Vernetzer

Für die Formulierung der erfindungsgemäßen RT-härtenden Klarlacke und der Vergleichsbeispiele wurden die Komponenten der in Tabelle 2 dargestellten Zusammensetzungen eingesetzt. Bei den Formulierungen I - VI wurden die Vernetzer, unabhängig von ihrem Feststoffgehalt, im Gewichtsverhältnis Bona Traffic HD / Vernetzer von 9 : 1 auf Lieferform eingesetzt. In der erfindungsgemäßen Formulierung VII wurde der Gehalt des erfindungsgemäßen hydrophilen Vernetzers U2 (Feststoffgehalt 100%) reduziert, um eine bessere Vergleichbarkeit mit dem Dynasylan Hydrosil 2926 zu schaffen, welches nur einen Feststoffgehalt von 30% besitzt.

Zur Herstellung der Formulierungen wurde die Bindemittelkomponente (hier: Bona Traffic HD) in einer Flasche vorgelegt, mit dem hydrophilen Vernetzer versetzt und das Gemisch mit einem Holzspatel ca. 30 Sekunden intensiv gerührt. Es entsteht eine homogene Dispersion. Diese wird über ein 80µ Filter filtriert und dann mit einer Schichtdicke von 15-35 µm auf Stahlbleche (Gardobond GB26S 60 OC) mittels 120 µm Spiralrakel aufgerakelt. Nachfolgend wird dieses beschichtete Blech nach Stehenlassen bei Raumtemperatur analytisch geprüft.

Die Formulierung VI wurde während der Homogenisierung bereits hochviskos und konnte deshalb nicht appliziert werden.

Aus Tabelle 3 geht hervor, dass die Lackeigenschaften der Beschichtungen III und IV, die die erfindungsgemäßen hydrophilen Vernetzer U1 und U2 enthalten, gegenüber dem Bona Traffic Hardener, einem hydrophilen Polyisocyanat, bessere Chemikalienbeständigkeiten (MEK-Test) zeigen. Auch die erfindungsgemäße Beschichtung VII zeigt gegenüber der Beschichtung V mit dem Dynasylan Hydrosil 2926 eine bessere Chemikalienbeständigkeit. Der erfindungsgemäße hydrophile Vernetzer U2 zeigt zudem eine Topfzeit von 4 h im 2-K-System und ist somit genauso stabil wie das kommerziell erhältliche hydrophilen Polyisocyanate, hier Bona Traffic Hardener.

**Tabelle 2: Zusammensetzung der erfindungsgemäßen RT-härtenden Klarlacken und Vergleichsbeispiel, Angaben in Gewichtsanteilen**

| Position | | I | II | III (erfindungsgemäß) | IV (erfindungsgemäß) | V | VI* | VII (erfindungsgemäß) |
|---|---|---|---|---|---|---|---|---|
| 1 | Bona Traffic HD (Bindemittelkomponente) | 10 | 9 | 9 | 9 | 9 | 9 | 9 |
| 2 | Bona Traffic Hardener | | 1 | | | | | |
| 3 | **Beispiel 1** (hydrophiler Vernetzer U1) | | | 1 | | | | |
| 4 | **Beispiel 2** (hydrophiler Vernetzer U2) | | | | 1 | | | 0,3 |
| 5 | Dynasylan Hydrosil 2926 | | | | | 1 | | |
| 6 | Dynasylan Sivo 160 | | | | | | 1 | |
| 7 | Vestanat Cat 11 H | | | 0,05 | 0,05 | 0,05 | 0,05 | 0,05 |
| 8 | Wasser | | | 0,8 | 0,8 | | 8 | |

| | | | | | | | | |
|---|---|---|---|---|---|---|---|---|
| *VI Lackformulierung wurde trotz Verdünnung mit Wasser hochviskos und konnte nicht appliziert werden. | | | | | | | | |

**Tabelle 3: Lackeigenschaften der Zusammensetzungen I-IV nach Härtung bei 23°C (7 Tage)**

| Zusammensetzung | I | II | III (erfindungsgemäß) | IV (erfindungsgemäß) | V | VII (erfindungsgemäß) |
|---|---|---|---|---|---|---|
| Erichsen Tiefung [mm] (EN ISO 1520) | 8,0 | 8,0 | 9,0 | 8,0 | 7,0 | 8,0 |
| Kugelschlag[ln lbs] (DIN-EN-ISO 6272-1) | >80 | >80 | >80 | >80 | >80 | >80 |
| MEK-Test [ASTM D 4752] (Doppelhübe, 1kg Auflagegewicht) | 10 | 80 | >150 | >150 | 50 | >150 |
| Topfzeit des 2-K-Systems | - | 4 h | 1 h | 4 h | >4 h | >4 h |

| | | | | | | |
|---|---|---|---|---|---|---|
| Die Topfzeit des 2-K-Systems ist die Zeit, innerhalb derer die Formulierung aus Tabelle 2 nach Herstellung noch den angegebenen MEK-Test besteht. | | | | | | |

## Patentansprüche

1. Alkoxysilanhaltiges Isocyanurat der Formel (II) 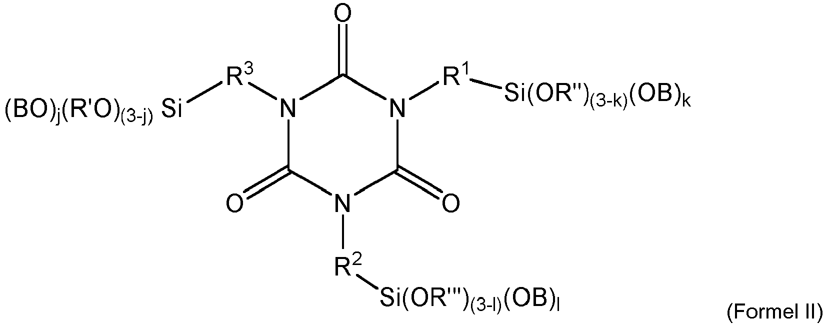 wobei
- R¹, R² und R³ jeweils unabhängig voneinander ein linearer oder verzweigter und/oder cyclischer C1-C8-Alkylenrest,
- R', R" und R'" jeweils unabhängig voneinander ein linearer oder verzweigter und/oder cyclischer C1-C8-Alkylrest,
- j, k, I jeweils unabhängig voneinander 0, 1, 2 oder 3,
- 1 ≤ j+k+l ≤ 7 und
- der Rest -OB ein Polyalkylenoxidpolyetheralkoxyrest ist, worin die Alkylenoxide Ethylenoxid und/oder Propylenoxid sind;
oder
- der Rest -OB die Formel -O{(X)-(y)ₐ-(Z)} aufweist, wobei
o der Rest X sich
▪ von einem Hydroxypolyethylenglykolether der Summenformel HO(CH₂CH₂O)ₙT¹ mit n = 2 - 100 mit T¹ = H oder C₁-C₆-Alkyl,
▪ einer Hydroxyalkylcarbonsäure oder
▪ einer Hydroxypolyethersulfonsäure ableitet,
∘ a für 0 oder 1 steht,
∘ der Rest y sich, wenn vorhanden, von einem Di- oder Polyisocyanat, einem Di- oder Polycarbonsäurederivat, einem Di- oder Polyepoxid, einem Mono- oder Polyalkoxysilan, einem Epoxiisocyanat, einem Epoxyalkoxysilan oder einem Isocyanatosilan ableitet und
∘ der Rest Z sich
▪ von einem hydroxyterminierten Polyether der Formel TO(CTHCH₂O)ₙ(CH₂CH₂O)ₚT', wobei T = -(CH₂)ₘCH₃ ist, n, m unabhängig voneinander = 0-20, p = 0-5 mit n größer oder gleich 4 mal p, und T' = H oder C₁-C₁₈-Alkyl,
▪ einem oder mehreren, ggf. verzweigten und/oder Cyclen und/oder Heterotam(e) enthaltenden Hydroxykohlenwasserstoff mit 1 -18 Kohlenstoffatomen, oder
▪ einem ggf. verzweigten und/oder Cyclen enthaltenden Alkylenoxid mit mindestens 4 Kohlenstoffatomen ableitet.

2. Isocyanurat nach Anspruch 1, **dadurch gekennzeichnet, dass**
- R¹ = R² = R³ = -CH₂-, -CH₂CH₂-, -CH₂CH₂CH₂- oder -CH₂CH₂CH₂CH₂- und
- R', R" und R" identisch und ausgewählt aus der Gruppe bestehend aus -CH₃, -CH₂CH₃, -CH(CH₃)CH₃ ist.

3. Isocyanurat nach Anspruch 2, **dadurch gekennzeichnet, dass**
- R¹ = R² = R³ = -CH₂CH₂CH₂- und
- R', R" und R'" identisch und ausgewählt aus der Gruppe bestehend aus -CH₃, -CH₂CH₃ ist.

4. Isocyanurat nach Anspruch 1, **dadurch gekennzeichnet, dass** der Polyalkylenoxidpolyetheralkoxylrest ein Polyethylenglykolmonomethyletheralkoxylrest mit im statistischen Mittel 5 bis 30 Ethylenoxideinheiten ist.

5. Isocyanurat nach Anspruch 1, **dadurch gekennzeichnet, dass**
- der Rest X sich
- von einem Hydroxypolyalkylenglykolether der Summenformel HO(CH₂CH₂O)ₙT¹ mit n = 2 - 100 mit T¹ = H oder C₁-C₆-Alkyl ableitet und
- der Rest Z die Formel -G-D-H aufweist, wobei
- G ein Strukturelement der Formel (III) bedeutet 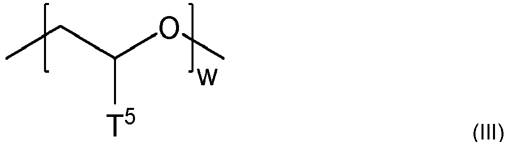
- wobei T⁵ unabhängig voneinander ein gesättigter, ungesättigter, verzweigter oder unverzweigter, substituierter oder unsubstituierter Kohlenwasserstoffrest mit mindestens 2 Kohlenstoffatomen
- und w größer oder gleich eins ist;
- D ein Oxyethylenrest oder Oxypropylenrest der Formel -(CH₂CHT⁶O)ᵥ mit v größer oder gleich 0, bevorzugt 0 - 2, und T⁶ = -H oder -CH₃; und
- H = Wasserstoff ist.

6. Verfahren zur Herstellung eines Isocyanurats nach einem der vorhergehenden Ansprüche, **dadurch gekennzeichnet, dass** mindestens ein alkoxysilanhaltiges Isocyanurat der Formel (I) 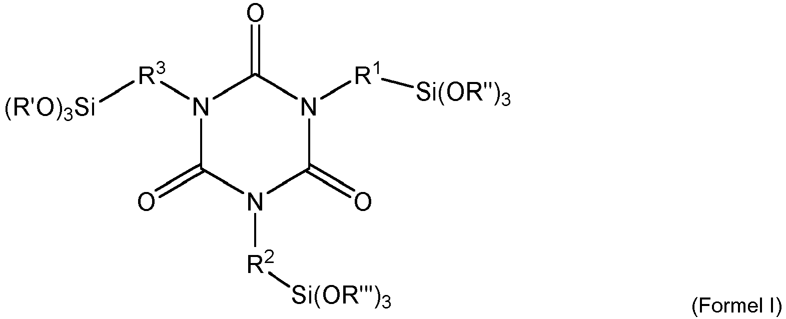 mit mindestens einem Hydrophilierungsmittel der Formel BOH, das mindestens eine OH-Gruppe aufweist und die Gruppe -OB einem der Ansprüche 1 bis 5 entspricht, umgesetzt wird, wobei R¹, R² und R³ jeweils unabhängig voneinander ein linearer, verzweigter oder cyclischer C1-C8-Alkylenrest, R', R" und R'" jeweils unabhängig voneinander ein linearer, verzweigter oder cyclischer C1-C8-Alkylrest und B ein hydrophiler Rest ist.

7. Verfahren nach Anspruch 6, **dadurch gekennzeichnet, dass** das alkoxysilanhaltige Isocyanurat der Formel (I) und das Hydrophilierungsmittel BOH im molaren Verhältnis (I) / BOH von bevorzugt von 15 : 1 bis 1 : 7, eingesetzt wird.

8. Verwendung eines Isocyanurats nach einem der Ansprüche 1 - 5 als Bestandteil von Beschichtungs- oder Kunststoffformulierungen, als Vernetzer, als Emulgator, als Zusatzmittel für mineralische Baustoffe und/oder als Zusatzstoff für wässrige Polyurethand ispersionen.

9. Beschichtungs- oder Kunststoffformulierung, umfassend ein Isocyanurat nach einem der Ansprüche 1 - 5.

10. Beschichtungs- oder Kunststoffformulierung nach Anspruch 9, umfassend weiterhin mindestens ein Isocyanurat der Formel (I)

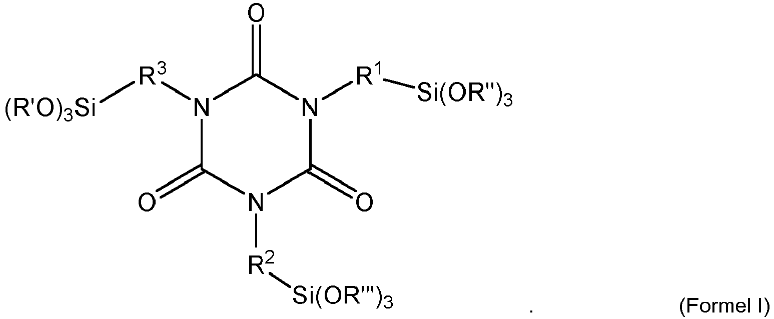

## Claims

1. Alkoxysilane-containing isocyanurate of the formula (II) 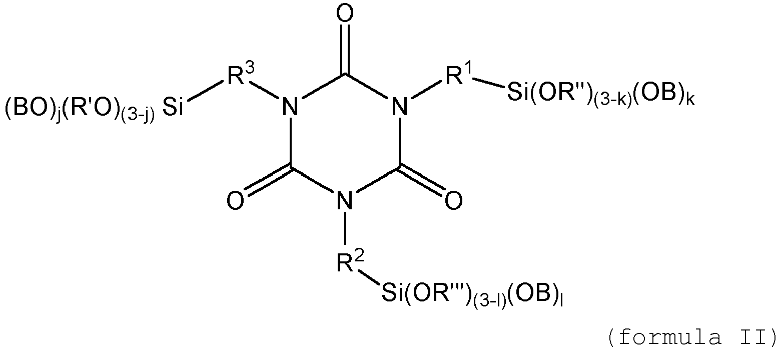 wherein
- R¹, R² und R³ in each case independently of one another are a linear or branched and/or cyclic C1-C8 alkylene radical,
- R', R" and R'" in each case independently of one another are a linear or branched and/or cyclic C1-C8 alkyl radical,
- j, k, l in each case independently of one another are 0, 1, 2 or 3,
- 1 ≤ j+k+l ≤ 7 and
- the radical -OB is a polyalkylene oxide polyether alkoxy radical in which the alkylene oxides are ethylene oxide and/or propylene oxide; or
- the radical -OB has the formula -O{(X)-(y)ₐ-(Z)}, wherein
∘ the radical X derives
▪ from a hydroxypolyethylene glycol ether of the empirical formula HO(CH₂CH₂O)ₙT¹ where n = 2 - 100, where T¹ = H or C₁-C₆ alkyl,
▪ from a hydroxyalkylcarboxylic acid or
▪ from a hydroxypolyethersulfonic acid,
∘ a is 0 or 1,
∘ the radical y, if present, derives from a di- or polyisocyanate, from a di- or polycarboxylic acid derivative, from a di- or polyepoxide, from a mono- or polyalkoxysilane, from an epoxyisocyanate, from an epoxyalkoxysilane or from an isocyanatosilane, and
∘ the radical Z derives
▪from a hydroxy-terminated polyether of the formula TO (CTHCH₂O)ₙ(CH₂CH₂O)ₚT', wherein T = -(CH₂)ₘCH₃ , n and m independently of one another = 0-20, p = 0-5 where n is greater than or equal to 4 times p, and T' = H or C₁-C₁₈ alkyl,
▪ from one or more than one hydroxyhydrocarbon having 1-18 carbon atoms, which is optionally branched and/or optionally contains rings and/or heteroatom(s), or
▪from an alkylene oxide having at least 4 carbon atoms which is optionally branched and/or optionally contains rings.

2. Isocyanurate according to Claim 1, **characterized in that**
- R¹ = R² = R³ = -CH₂-, -CH₂CH₂-, -CH₂CH₂CH₂- or -CH₂CH₂CH₂CH₂-, and
- R', R" and R'" are identical and selected from the group consisting of -CH₃, -CH₂CH₃, -CH(CH₃)CH₃.

3. Isocyanurate according to Claim 2, **characterized in that**
- R¹ = R² = R³ = -CH₂CH₂CH₂- and
- R', R" and R''' are identical and selected from the group consisting of -CH₃, -CH₂CH₃.

4. Isocyanurate according to Claim 1, **characterized in that** the polyalkylene oxide polyether alkoxy radical is a polyethylene glycol monomethyl ether alkoxy radical having on average 5 to 30 ethylene oxide units.

5. Isocyanurate according to Claim 1, **characterized in that**
- the radical X derives
- from a hydroxypolyalkylene glycol ether of the empirical formula HO(CH₂CH₂O)ₙT¹ where n = 2 - 100, where T¹ = H or C₁-C₆ alkyl, and
- the radical Z has the formula -G-D-H, wherein
- G is a structural element of the formula (III) 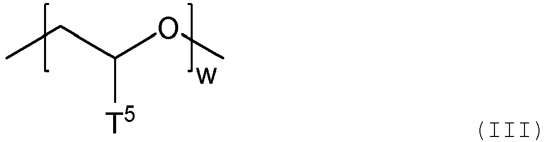
- wherein T⁵ independently at each occurrence is a saturated, unsaturated, branched or unbranched, substituted or unsubstituted hydrocarbon radical having at least 2 carbon atoms
- and w is greater than or equal to one;
- D is an oxyethylene radical or oxypropylene radical of the formula - (CH₂CHT⁶O)ᵥ where v is greater than or equal to 0, preferably 0 - 2, and T⁶ = -H or -CH₃; and
- H = hydrogen.

6. Process for preparing an isocyanurate according to any of the preceding claims, **characterized in that** at least one alkoxysilane-containing isocyanurate of the formula (I) 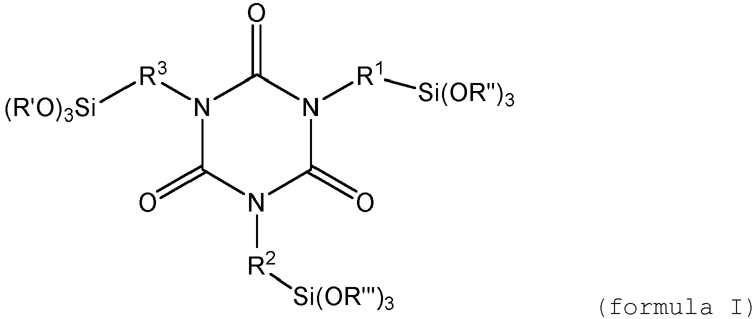 is reacted with at least one hydrophilizing agent of the formula BOH which has at least one OH group, and the group -OB corresponds to any of Claims 1 to 5, wherein R¹, R² and R³ in each case independently of one another are a linear, branched or cyclic C1-C8 alkylene radical, R', R" and R"' in each case independently of one another are a linear, branched or cyclic C1-C8 alkyl radical, and B is a hydrophilic radical.

7. Process according to Claim 6, **characterized in that** the alkoxysilane-containing isocyanurate of the formula (I) and the hydrophilizing agent BOH are used in a (I) / BOH molar ratio of preferably from 15 : 1 to 1 : 7.

8. Use of an isocyanurate according to any of Claims 1
- 5 as constituent of coating or plastics formulations, as crosslinker, as emulsifier, as admixture for mineral building materials and/or as adjuvant for aqueous polyurethane dispersions.

9. Coating or plastics formulation comprising an isocyanurate according to any of Claims 1 - 5.

10. Coating or plastics formulation according to Claim 9, further comprising at least one isocyanurate of the formula (I)

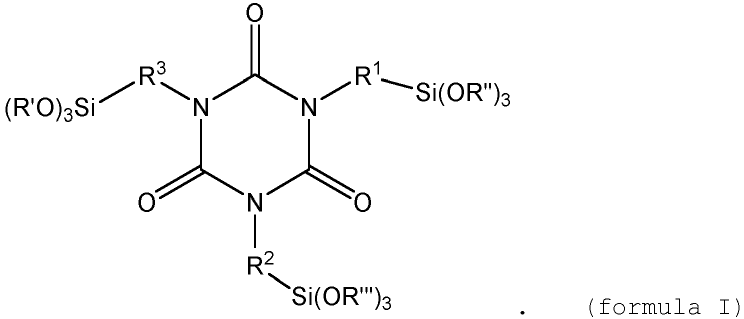

## Revendications

1. Isocyanurate contenant un alcoxysilane, de formule (II) 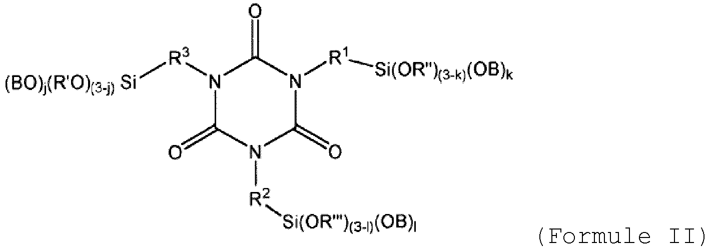 dans laquelle
- R¹, R² et R³ représentent chacun, indépendamment les uns des autres, un radical alkylène en C₁-C₈ linéaire ou ramifié et/ou cyclique,
- R', R" et R"' représentent chacun, indépendamment les uns des autres, un radical alkyle en C₁-C₈ linéaire ou ramifié et/ou cyclique,
- j, k, l valent chacun, indépendamment les uns des autres, 0, 1, 2 ou 3,
- 1 ≤ j+k+l ≤ 7 et
le radical -OB est un radical alcoxy de polyéther de poly(oxyde d'alkylène) dans lequel les oxydes d'alkylène sont l'oxyde d'éthylène et/ou l'oxyde de propylène ;
ou
- le radical -OB présente la formule -O{(X)-(y)ₐ-(Z)}, où
∘ le radical X dérive
▪ d'un hydroxypolyéthylèneglycoléther de formule brute HO(CH₂CH₂O)ₙT¹
où n = 2 - 100 et où T¹ représente un atome d'hydrogène ou un groupe alkyle en C₁-C₆,
▪ d'un acide hydroxyalkylcarboxylique ou
▪ d'un acide hydroxypolyéthersulfonique,
∘ a représente 0 ou 1,
∘ le radical y dérive, lorsqu'il est présent, d'un di- ou polyisocyanate, d'un dérivé d'acide di- ou polycarboxylique, d'un di- ou polyépoxyde, d'un mono- ou polyalcoxysilane, d'un époxyisocyanate, d'un époxyalcoxysilane ou d'un isocyanatosilane et
∘ le radical Z dérive
▪ d'un polyéther à terminaison hydroxy de formule TO(CTHCH₂O)ₙ(CH₂CH₂O)ₚT', dans laquelle T = - (CH₂)ₘCH₃, n, m valent, indépendamment l'un de l'autre, 0-20, p = 0-5, n étant supérieur ou égal à 4 fois p, et T' représente un atome d'hydrogène ou un groupe alkyle en C₁-C₁₈,
▪ d'un ou de plusieurs hydrocarbures hydroxylés ayant de 1 à 18 atomes de carbone, éventuellement ramifiés et/ou contenant des cycles et/ou un/des hétéroatome(s), ou
▪ d'un oxyde d'alkylène ayant au moins 4 atomes de carbone, éventuellement ramifié et/ou contenant des cycles.

2. Isocyanurate selon la revendication 1, **caractérisé en ce que**
- R¹ = R² = R³ = -CH₂-, -CH₂CH₂-, -CH₂CH₂CH₂- ou -CH₂CH₂CH₂CH₂- et
- R' , R" et R"' sont identiques et choisis dans le groupe constitué par -CH₃, -CH₂CH₃, -CH(CH₃)CH₃.

3. Isocyanurate selon la revendication 2, **caractérisé en ce que**
- R¹ = R² = R³ = -CH₂CH₂CH₂- et
- R', R" et R"' sont identiques et choisis dans le groupe constitué par -CH₃, -CH₂CH₃.

4. Isocyanurate selon la revendication 1, **caractérisé en ce que** le radical alcoxy de polyéther de poly(oxyde d'alkylène) est un radical alcoxy d'éther monométhylique de polyéthylèneglycol ayant en moyenne statistique de 5 à 30 unités oxyde d'éthylène.

5. Isocyanurate selon la revendication 1, **caractérisé en ce que**
- le radical X dérive
- d'un hydroxypolyalkylèneglycoléther de formule brute HO(CH₂CH₂O)ₙT¹ où n = 2 - 100 et où T¹ représente un atome d'hydrogène ou un groupe alkyle en C₁-C₆ et
- le radical Z présente la formule -G-D-H, où
- G représente un élément structural de formule (III) 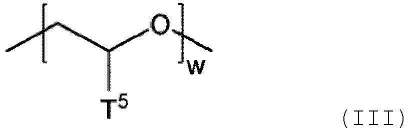
- où T⁵ est chaque fois indépendamment un radical hydrocarboné saturé, insaturé, ramifié ou non ramifié, substitué ou non substitué, ayant au moins 2 atomes de carbone
- et w est supérieur ou égal à un ;
- D est un radical oxyéthylène ou oxypropylène de formule -(CH₂CHT⁶O)ᵥ où v est supérieur ou égal à 0, de préférence 0 - 2, et T⁶ = -H ou -CH₃ ; et
- H = hydrogène.

6. Procédé pour la préparation d'un isocyanurate selon l'une quelconque des revendications précédentes, **caractérisé en ce qu'**on fait réagir au moins un isocyanurate contenant un alcoxysilane, de formule (I) 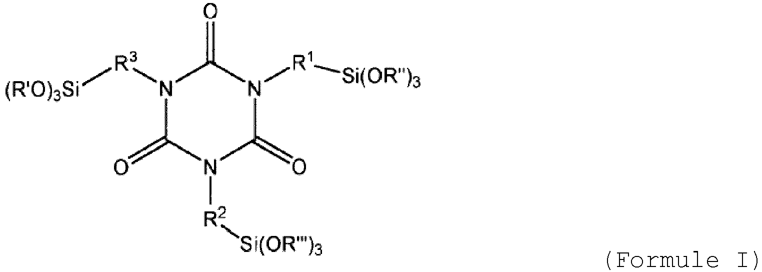 avec au moins un agent d'hydrophilisation de formule BOH, qui comporte au moins un groupe OH et le groupe -OB correspond à l'une des revendications 1 à 5, R¹, R² et R³ représentant chacun, indépendamment les uns des autres, un radical alkylène en C₁-C₈ linéaire, ramifié ou cyclique, R', R" et R"' représentant chacun, indépendamment les uns des autres, un radical alkyle en C₁-C₈ linéaire, ramifié ou cyclique et B étant un radical hydrophile.

7. Procédé selon la revendication 6, **caractérisé en ce qu'**on utilise l'isocyanurate contenant un alcoxysilane, de formule (I), et l'agent d'hydrophilisation BOH dans le rapport molaire (I) / BOH de préférence de 15 : 1 à 1 : 7.

8. Utilisation d'un isocyanurate selon l'une quelconque des revendications 1 - 5 en tant que composant de formulations de revêtement ou de matière plastique, en tant qu'agent de réticulation, en tant qu'émulsifiant, en tant qu'additif pour matériaux de construction minéraux et/ou en tant qu'additif pour des dispersions de polyuréthane.

9. Formulation de revêtement ou de matière plastique, comprenant un isocyanurate selon l'une quelconque des revendications 1 - 5.

10. Formulation de revêtement ou de matière plastique selon la revendication 9, comprenant en outre au moins un isocyanurate de formule (I)
